# EUROPEAN PATENT APPLICATION

(11) **EP 2 073 429 A1**
(43) Date of publication of application: **24.06.2009**
(21) Application number: 07801102.0
(22) Date of filing: 14.09.2007
(51) Int. Cl.: H04L 7/00, G06F 17/00

(54) **DATA SYNCHRONOUS METHOD, SYSTEM AND APPARATUS**

(30) Priority: 30.09.2006 CN 200610141932
(71) Applicant: Huawei Technologies Co., Ltd., Longgang District, Shenzhen Guangdong 518129 (CN)
(72) Inventor: XIE, Lei, Shenzhen Guangdong 518129 (CN)
(74) Representative: Haley, Stephen
(86) International application number: PCT/CN2007/070696
(87) International publication number: WO 2008/040224

(57) **Abstract**

A data synchronization method includes: acquiring, in a partial-data synchronization process, a first part of a data item which is to be sent to a client, wherein the data item comprises at least the first part and a second part, and acquiring a data link corresponding to at least the second part of the data item; sending the acquired first part of the data item and the data link to the client in the partial-data synchronization process; and when receiving a request including the data link from the client, processing the at least second part of the data item corresponding to the data link. The present invention also discloses a data synchronization system, a data synchronization server and a client, with which a client may directly acquire a second part of a data item with the data link without initiating another data synchronization procedure.

## Description

### Field of the Invention

The present invention relates to the field of data synchronization technologies, and particularly, to a data synchronization method, data synchronization system, data synchronization server and client.

### Background of the Invention

Advancements in mobile communication technologies and computer technologies, especially convenient and easily wielded functions, have promoted the popularity of mobile calculation and communication equipment. A user may receive and send information at any time and any place, and may also run an application in a piece of handheld equipment. Meanwhile, results yielded by such data interactions and executions of applications need to be stored into the handheld equipment, and also need to be consistent with data of the corresponding type in other data equipment. For example, a telephone directory may be stored in a mobile phone and a personal digital assistant (PDA), and also in a personal computer or a laptop computer in the office or at home, in which case people prefer that the data stored in those equipments are identical, and when data in one of the equipments is changed, data in the other equipment is modified correspondingly, which is called data synchronization.

An interaction process for performing data synchronization between a client and a server is defined in Synchronization Markup Language (SyncML) synchronization protocol. The client is typically a mobile phone, PC or PDA, while the server may be an ordinary server or PC.

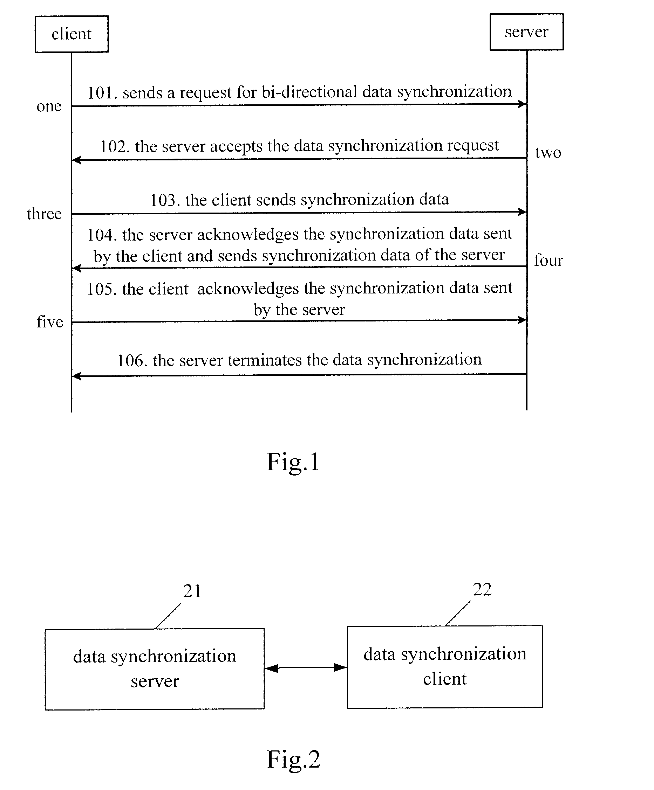

When a client initiates data synchronization, the interaction process is as shown in Fig.1 and specifically includes the following steps.

In block 101, the client sends to the server a first data packet to initiate a request for performing bi-directional data synchronization. The first data packet includes initialization negotiation parameters for data synchronization, e.g. equipment capabilities, type of data synchronization, and type of data to be synchronized.

In block 102, after receiving the first data packet, the server processes the initialization negotiation parameters to determine whether to accept the data synchronization request of the client, and returns a second data packet to the client as a response to the initialization negotiation request of the client. Upon accepting the data synchronization request, the second data packet includes an response message and equipment capabilities of the server.

In block 103, after receiving the response data packet which includes the response message for accepting the data synchronization request from the server, the client sends synchronization data of the client in a third data packet to the server.

In block 104, after receiving the third data packet, the server performs synchronization and sends a fourth data packet which carries synchronization data of the server to the client and the acknowledgement of the synchronization data sent by the client.

In block 105, after receiving the fourth data packet, the client performs synchronization and returns a fifth data packet to the server to acknowledge the received synchronization data information.

In block 106, after receiving the fifth data packet, the server terminates the data synchronization by sending a sixth data packet to the client.

Through the above procedure, when the data stored in the server or the client is wholly synchronized, the synchronization process implemented in the above procedure is called a whole-data synchronization process.

However, data stored in a server is generally more than a client can take. In many cases, a client may want to synchronize part of the data or the data with certain characteristics in the server. Therefore, filtering rules are added in SyncML data synchronization protocol to filter out data that a user does not wish to synchronize. Such filtering rules may be based on attributes of data items such as creation date of files, or based on values of a certain field of data items such as a priority field in VCALENDAR. Accordingly, a partial-data synchronization process for sending part of a data item to a client differs from the above whole-data synchronization process in that: the client sends a filtering rule to the server in the first data packet in block 101, such as asking the server to send one part of a data item, e.g. asking the server to remove the attachment of an e-mail, to abbreviate an e-mail whose size is larger than two thousand bytes to an e-mail of two thousand bytes before sending the e-mail to the client. Then according to the filtering rule from the client, the server sends the part of the data item in the fourth data packet.

The client may further need to acquire the whole data item or other parts of the data item which has not been synchronized with the client after the server sends one part of the data item to the client, in which case the client needs to initiate another synchronization process as shown in Fig.1 with the server to acquire the whole data item or the un-synchronized parts of the data item. As a result, it will take more time for the client to acquire the whole data item or other parts of the data item, and moreover, certain interactions are also to be performed, which results in a waste of time of the user and an increase in the amount of information interacted.

In addition, if the client is to send a message which includes the data item after the server has sent part of the data item to the client, the client has to initiate another procedure as shown in Fig.1 to acquire the whole data item or other parts of the data item and load the data item into the message to be sent, which not only wastes the time of the user, but also requires larger storage capacity of the client and larger amount of information exchanged.

### Summary

The present invention provides a method, system, server and client for data synchronization to save time of a user.

A method for data synchronization includes:
acquiring, in a partial-data synchronization process, a first part of a data item which is to be sent to a data synchronization client and acquiring a data link with which the whole data item or a second part of the data item is retrievable;
sending the first part of the data item and the data link to the client.

A data synchronization system includes:
a data synchronization server for acquiring a first part of the data item sent to a first data synchronization client, acquiring the data link with which the whole data item or a second part of the data item is retrievable, and sending the first part of the data item and the data link to the first data synchronization client in a partial-data synchronization process;
a first data synchronization client for receiving a first part of the data item of a data item and a data link with which the whole data item or a second part of the data item is retrievable from the data synchronization server, and storing the first part of the data item and the data link correspondingly.

A data synchronization server includes:
a communication module for acquiring a first part of the data item sent to a data synchronization client, and sending a received first part of the data item of a data item and data link to the data synchronization client;
a synchronization service processing module for acquiring a data link with which the whole data item or a second part of the data item is retrievable based on the first part of the data item of a data item acquired by the communication module, and providing the data link to the communication module.

A client includes:
a communication module for receiving a first part of the data item of a data item and a data link with which the whole data item or a second data of the data item is retrievable sent by a data synchronization server;
a synchronization service processing module for storing the data link and first part of the data item received by the communication module.

It can be seen from the above technical solutions that in the embodiments of the present invention, a data synchronization server acquires a first part of a data item to be sent to a client requiring data synchronization, acquires a data link through which the whole data or a second part of the data item is retrievable, and sends the first part of the data item and the data link to the client. Thus, the client requiring data synchronization may directly acquire the whole data or another part of the data item according to the data link, in which case the client does not need to acquire the whole data or other parts of the data item through a data synchronization process again as in the prior art. Therefore, time of the user is saved and the amount of interaction information between the server and the client is reduced.

### Brief Description of the Drawings

Fig.1 is a flowchart of a data synchronization process in accordance with the prior art;
Fig.2 is a schematic diagram illustrating a structure of a system in accordance with an embodiment of the present invention;
Fig.3 is a schematic diagram illustrating a structure of a system in accordance with an embodiment of the present invention;
Fig.4 is a schematic diagram illustrating a structure of a system in embodiment 1 in accordance with an embodiment of the present invention;
Fig.5 is a schematic diagram illustrating an internal structure of a data synchronization sub-system in a system in embodiment 1 in accordance with the present invention;
Fig.6 is a schematic diagram illustrating an internal structure of a data synchronization client in a system in embodiment 1 in accordance with the present invention;
Fig.7 is a schematic diagram illustrating a structure of a system in embodiment 2 in accordance with the present invention;
Fig.8 is a flowchart of a method in accordance with an embodiment of the present invention;
Fig.9 is a flowchart of an exemplary method in accordance with an embodiment of the present invention;
Fig.10 is a flowchart of a method in accordance with an embodiment of the present invention; and
Fig.11 is a flowchart of message processing after synchronization in a method in accordance with an embodiment of the present invention.

### Embodiments of the Invention

The present invention is hereinafter described in detail with reference to the accompanying drawings to further clarify the objects, technical solutions and advantages of the present invention.

A method in accordance with an embodiment of the present invention includes: during a data synchronization process of sending synchronization data to a data synchronization client, sending, by a data synchronization server, a first part of a data item to be synchronized and a data link corresponding to the whole data item or a second part of the data item.

The second part of the data item may be another part of the data item apart from the first part or together with the whole or part of the first part. With the above method, a user may directly acquire the whole data item or another part of the data item stored in the server using the data link without initiating another data synchronization process to acquire the whole data item or another part of the data item. Therefore, time of the user is saved and the amount of interaction information between the data synchronization server and the data synchronization client is reduced.

The data link may be information of the whole data item or a second part of the data item, e.g. name information of the whole data item or a second part of the data item, identifier information of the whole data item or a second part of the data item, or path information of the whole data item or a second part of the data item. The part of a data item may be attributes or field information of the data item, such as an attachment of an email, attributes of an email or attributes of a file, and etc.

As shown in Fig.2, a data synchronization system in accordance with the present invention includes a data synchronization server 21 and a data synchronization client 22.

In a data synchronization process where the data synchronization server 21 sends part of a data item to the data synchronization client 22, the data synchronization server 21 generates a data link corresponding to the whole data item or a second part of the data item, and sends the data link and a first part of the data item to the data synchronization client 22.

The data synchronization server 21 may generate the data link based on information which is set in the data synchronization server by the user and which indicates that a data link of the whole data item or of a second part of the data item should be acquired when partial-data synchronization is performed, and send the data link to the data synchronization client 22. Or the data synchronization server 21 may generate the data link after determining that the synchronization data to be sent to the data synchronization client is part of the data item, and send the data link to the data synchronization client 22. The data link may be generated based on a request which is for obtaining a data link of the whole data item or of a second part of the data item during partial-data synchronization and which is included in a data synchronization request from the data synchronization client 22.

The data synchronization client 22 receives from the data synchronization server 21 the first part of the data item and the data link corresponding to the whole data item or a second part of the data item, and stores the first part of the data item and the data link correspondingly, or sets a request in initialization negotiation parameters to be sent to the data synchronization server instructing the data synchronization server to send during partial-data synchronization a data link corresponding to the whole data item or a second part of the data item.

In a system in accordance with the present invention, it may be configured either in a data synchronization server or in subscription information of a user that a plurality of data synchronization clients may perform associated synchronization. Accordingly, the data synchronization server is further operable for performing data synchronization with one of the plurality of data synchronization clients and then performing data synchronization with the other of the plurality of data synchronization clients according to setting information indicating associated synchronization required for the plurality of data synchronization clients.

The user client in which a data synchronization client 22 resides may send a request for acquiring the whole data item or a second part of the data item to the network side by clicking on the data link, and receive the whole data item or the second part of the data item returned by the network side in response to the request.

On the network side, user data may be stored in the data synchronization server or in other devices. After the user clicks on the data link, the user client may send a request to the data synchronization server or other devices storing the user data using the data link. After receiving the request, the data synchronization server or other devices acquire the whole data item or a second part of the corresponding data item based on the request and returns the data to the user client.

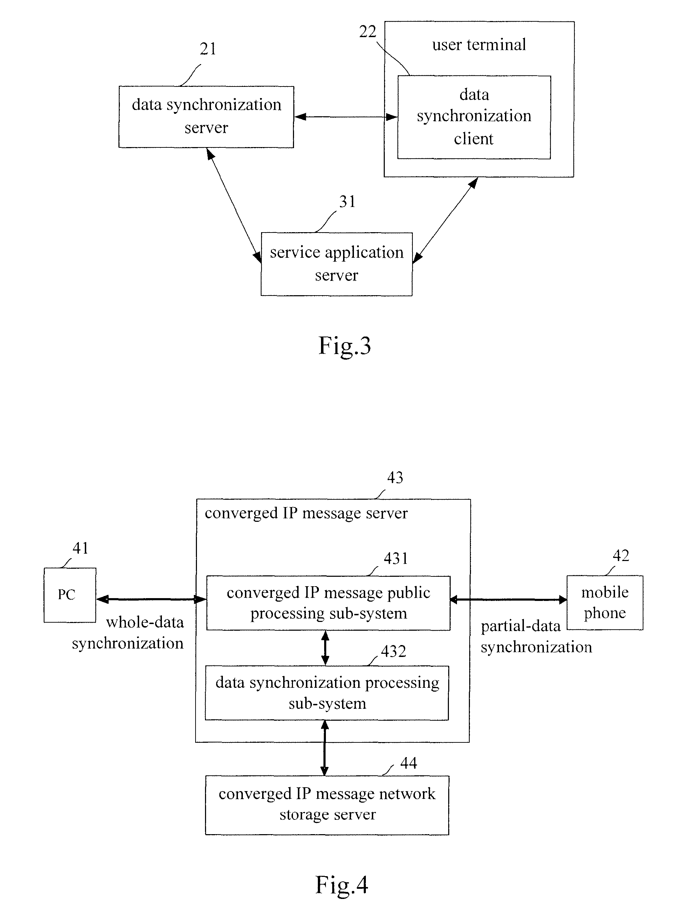

In addition, as shown in Fig.3, the system in accordance with the present invention may further include a service application server 31. A user may add a data link into service data, e.g. a short message, a multimedia message, a converged IP message or an email, which is to be sent through a user client to the service application server 31. The service application server 31 receives the service data including the data link from the user client 22, interacting with a storage device on the network side storing user data according to the data link to acquire the whole data item or a second part of the corresponding data item, and replacing the data link in the service data with the whole data item or the second part of the data item acquired.

The service application server 31 may reside in a short message server, a multimedia message server, an email server or a converged IP message server. Functions of the data synchronization server may be implemented by corresponding functional entities set in the service application server, and thus the functional entities serve as a data synchronization processing sub-system in the service application server. The above data synchronization server may also be a separated apparatus.

The present invention is hereinafter described further with reference to two specific system embodiments, and in one of which functions of the data synchronization server are implemented by the data synchronization processing sub-system in an converged IP message server and in the other of which by a separated data synchronization server.

Functions of the data synchronization server are implemented by a data synchronization sub-system in a converged IP message server in accordance with a system in embodiment 1 of the present invention.

As shown in Fig.4, a system for data synchronization in this embodiment includes: a Personal Computer (PC) 41, a mobile phone 42, a converged IP message server 43 and a converged IP message network storage server 44. The converged IP message server 43 includes a converged IP message public processing sub-system 431 and a data synchronization processing sub-system 432. The PC 41 and the mobile phone 42 are both converged IP message clients.

The PC 41 assumes the same functions as those of the client referred to in Fig.1 in accordance with the prior art, i.e. the PC 41 is operable for interacting with the data synchronization sub-system via the converged IP message public processing sub-system 431 to implement whole-data synchronization.

The mobile phone 42 is a user client in the present invention and includes a data synchronization client for interacting with the data synchronization processing sub-system 432 via the converged IP message public processing sub-system 431 to implement partial-data synchronization. It should be clear that the mobile phone may also interact with the data synchronization processing sub-system 432 via the converged IP message public processing sub-system 431 to implement whole-data synchronization. In addition, the mobile phone in the present invention is further operable for generating a message carrying the data link based on one part of the data item and a data link stored correspondingly in the mobile phone, and sending the message to the converged IP message public processing sub-system 431.

The converged IP message public processing sub-system 431 is operable for processing requests from converged IP message clients and interacting with converged IP message clients directly, e.g. forwarding data packets destined for the data synchronization processing sub-system 432 to the data synchronization processing sub-system 432 and forwarding data packets from the data synchronization processing sub-system 432 to corresponding converged IP message clients.

According to the embodiment, the converged IP message public processing subsystem 431 may also generate a data link based on obtained location of the whole data item or a second part of the data item from the data synchronization processing sub-system 432, and return the generated data link to the data synchronization processing sub-system 432. If the data item is file data, the data link may be generated by mapping the location information of the whole data item or the second part of the data item on the network side into a data system which is open for external systems. If the data are stored in a database, the data link may include information related to searching the data item and direct to entry system of the database. The data link may be a data link of the whole data item or of a second part of the data item. Besides generating a data link based on location information, the converged IP message public processing sub-system 431 may alternatively generate the data link of the whole data item or another part of the data item based on a unique identifier of the whole data item or a second part of the data item. The data link of the other part of the data item may be an attachment of an email or a forwarded email, etc. The unique identifier may be the name or ID of the whole data item or the second part of the data item.

In addition, the converged IP message public processing sub-system 431 in the embodiment is further operable for checking a message from a mobile phone, if detecting that a data link is included in the message, acquiring the whole data item or the second part of the data item by means of the data link, and replacing the data link with the acquired whole data item or the second part of the data item in the message according to an operator policy, subscription information of the user, and setting information of the user for changing the contents of the message, and then sending the changed message.

The data synchronization processing sub-system 432 assumes the same functions as those of the data synchronization server. The data synchronization processing sub-system 432 may generate a data link based on the location information or a unique identifier of data in the data item, or alternatively send the location information or the unique identifier of data in the data item to the converged IP message public processing sub-system 431 and receive a corresponding data link returned by the converged IP message public processing sub-system 431.

The converged IP message network storage server 44 is a network-based data storage device and operable for storing converged IP messages, history records and separate media files, and may also for storing synchronization data of users.

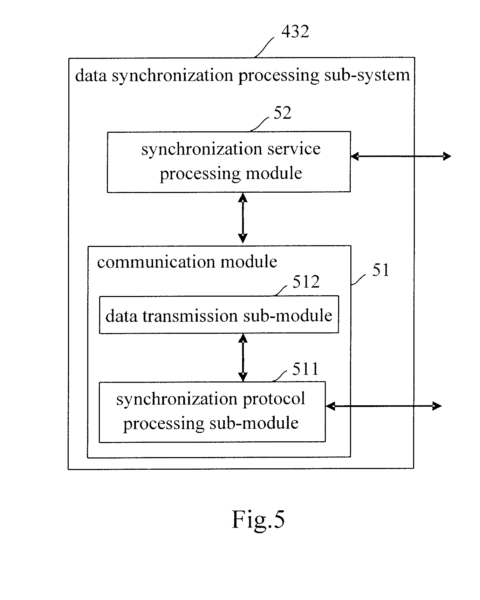

As shown in Fig.5, the data synchronization processing sub-system 432 may specifically include a communication module 51 and a synchronization service processing module 52.

The communication module 51 is operable for receiving a data packet from a data synchronization client via the converged IP message public processing sub-system 431, resolving the data packet according to a data synchronization protocol to obtain information, delivering the obtained information to the synchronization service processing module 52. And the communication module 51 is also operable for encapsulating information obtained from the synchronization service processing module 52 into a data packet and sending the data packet to the data synchronization client via the converged IP message public processing sub-system 431.

The synchronization service processing module 52 is operable for interacting with a device storing user data to perform data synchronization based on the information from the communication module 51. And in a data synchronization process where a first part of a data item is sent to a data synchronization client, the synchronization service processing module 52 is operable for acquiring a data link of the whole data item or a second part of the data item based on the location information of the whole data item or a second part of the data item in the device storing user data, loading the data link and the first part of the data item into a message which is to be sent to the data synchronization client, and sending the message to the communication module 51. In the above process, the synchronization service processing module 52 may obtain the data link by several methods, such as generating the data link by itself based on the location information of the data item, or sending the location information of the data item to the converged IP message public processing sub-system 431 and obtaining the data link generated by the converged IP message public processing sub-system 431.

As can be seen in Fig.5, the communication module 51 may include a data transmission sub-module 511 and a synchronization protocol processing sub-module 512.

The data transmission sub-module 511 is operable for receiving a data packet from a converged IP message client via a converged IP message public processing sub-system, sending the received data packet to the synchronization protocol processing sub-module 512, and sending a data packet from the synchronization protocol processing sub-module 512 to the converged IP message client via the converged IP message public processing sub-system.

The synchronization protocol processing sub-module 512 is operable for generating a synchronization protocol data packet based on information from the synchronization service processing module 52, sending the generated data packet to the data transmission sub-module 511, and receiving a data packet from the data transmission sub-module 511, resolving the data packet using a data synchronization protocol, and sending the resolved information to the synchronization service processing module 52.

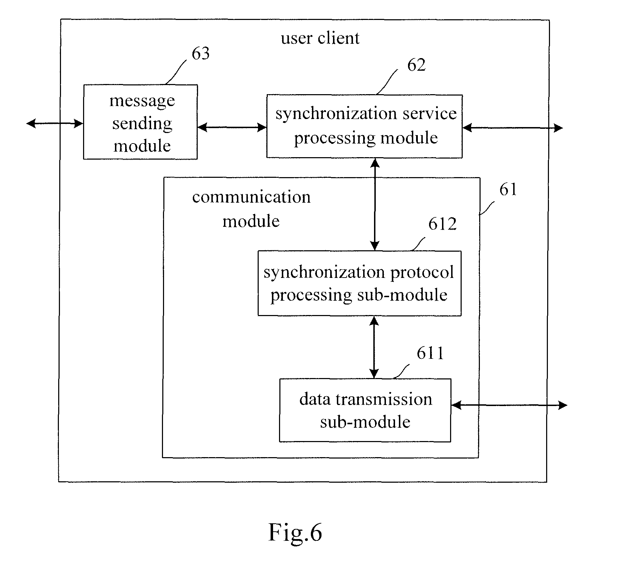

As shown in Fig.6, a data synchronization client residing in a mobile phone may include a communication module 61 and a synchronization service processing module 62.

The communication module 61 is operable for receiving a data packet from a data synchronization processing sub-system via a converged IP message public processing sub-system 431, resolving the data packet using a data synchronization protocol and delivering information obtained by resolving to the synchronization service processing module 62. And the communication module 61 is also operable for encapsulating information from the synchronization service processing module 62 into a data packet and sending the data packet to the data synchronization processing sub-system via the converged IP message public processing sub-system 431. The communication module 61 may include a synchronization protocol processing sub-module 612 and a data transmission sub-module 611. The functions of the two sub-modules 611 and 612 are respectively the same as the corresponding sub-modules in the data synchronization processing sub-system 432, so this will not be specified herein.

The synchronization service processing module 62 is operable for receiving information from the communication module 61, acquiring a data link and a first part of a data item included in the information, and performing data synchronization for the user data stored in the synchronization service processing module 62, which includes storing the data link and the first part of the data item correspondingly, or loading a request, requesting a data link be sent when the first part of the data item is being synchronized, into a data synchronization request message which is to be sent to the data synchronization processing sub-system and sending the data synchronization request message to the communication module. The synchronization service processing module may also receive and process information in a data packet from the data synchronization processing sub-system in the prior art, perform data synchronization according to the information, generate information and send the information to the data synchronization processing sub-system via the communication module 61.

In addition, a mobile phone according to the present invention may further include a message sending module 63 which is operable for loading a stored data link into a message as instructed by a user and sending the message to a converged IP message public processing sub-system 431.

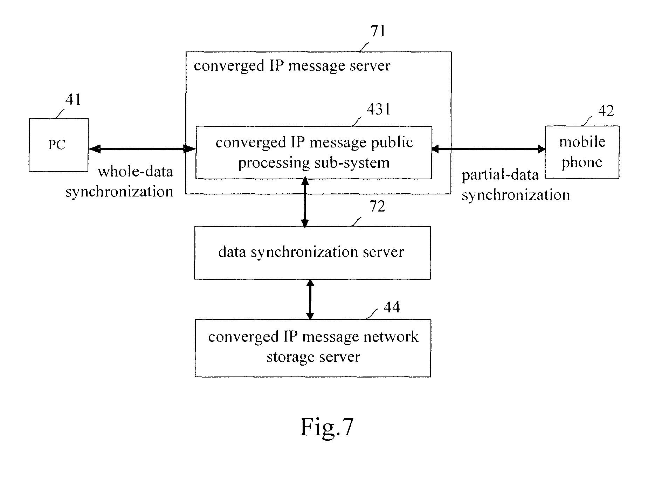

Embodiment 1 of the system in accordance with the present invention has been described above. The structure of a system in embodiment 2 in accordance with the present invention is as shown in Fig.7, which includes a PC 41, a mobile phone 42, a converged IP message server 71, a data synchronization server 72 and a converged IP message network storage server 44.

The functions and internal structure of the PC 41, mobile phone 42 and converged IP message network storage server 44 are the same as those in a system in embodiment 1 of the present invention.

A converged IP message public processing sub-system 431 resides in a converged IP message server 71, which assumes basically the same functions as those in embodiment 1 and differs in that it interacts with a data synchronization server instead of a data synchronization processing sub-system.

The assumed functions and specific internal structure of the data synchronization server 72 in the present embodiment are almost the same as those of the data synchronization processing sub-system in embodiment 1 and differ in that the data synchronization server in this embodiment is a piece of equipment separate from the converged IP message server.

The system and apparatus in accordance with the present invention have been described in detail. A data synchronization method provided by the present invention is hereinafter described in detail.

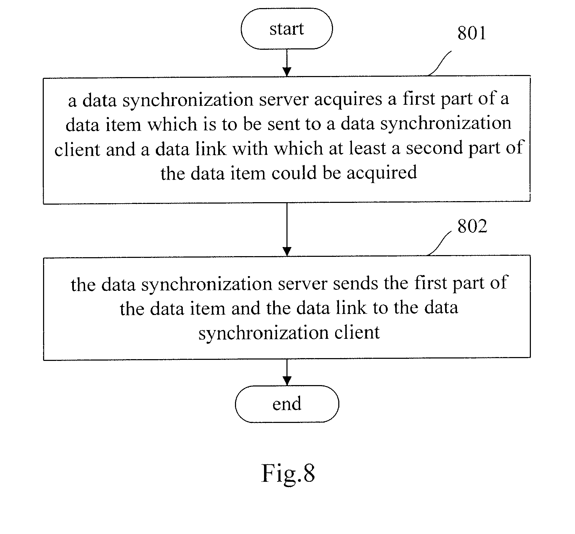

The overall flow of the method in accordance with the present invention is as shown in Fig.8, which includes:
In block 801, during a partial-data synchronization process, a data synchronization server acquires a first part of a data item which is to be sent to a data synchronization client and a data link corresponding to the whole data item or a second part of the data item.
In block 802, the data synchronization server sends the first part of the data item and the data link to the data synchronization client.
In block 801, the data synchronization server may acquire the data link based on information set by a user in the data synchronization server which indicates that the data link of the whole data item or the second part of the data item should be acquired during partial-data synchronization, or based on a request included in the data synchronization request from the data synchronization client for acquiring the data link of the whole data item or of the second part of the data item during partial-data synchronization.

In addition, the data synchronization server may acquire the data link by generating the data link based on location information of the whole data item or the second part of the data item, or by sending the location information of the whole data item or the second part of the data item to another device, and obtaining the data link generated by the device. Besides generating the data link based on the location information, the data synchronization server or other devices may also generate the data link based on a unique identifier of the whole data item or the second part of the data item. The data link of the second part of the data item may direct to data such as an attachment of an email and a forwarded email.

An example of the data synchronization server sending a message which includes an email attachment to the data synchronization client is given as follows.

```
     Message-Id: <2007040900069@mail.server.com>
     From: John Doe <john.doe@server.com>
     To: Jane Doe <jane.doe@server.com>
     Date: Mon, 9 Apr 2007 08:15:39 -0800 (PST)
     Subject: Example of email with attachment
     MIME-Version: 1.0
     Content-Type: multipart/mixed; boundary=some_boundary

     --some_boundary
     Content-Type: text/plain; charset=us-ascii
     Content-ID: <body_id@mail.server.com>

     --some_boundary
     Content-Type: message/external-body;
             access-type=mail-server;
             server=mail.server.com
             name="OMADSWGimage.jpg"
     Content-Type: image/jpeg
     Content-ID: <attach_id@mail.server.com>
     Content-Transfer-Encoding: binary
     Content-Length: 204800
```

A data link for acquiring the other part of the data item, i.e. a data link for acquiring the attachment of the email in the example, is included in the above message. The data synchronization server generates the data link based on the unique identifier of the attachment of the email and sends the data link to the data synchronization client. Then, the data synchronization client may acquire the attachment of the email from the server based on the identifier of the attachment indicated by the data link in the message.

A part of the data item to which a data link is directed may also be a title of an attribute of the data item, and the data link may be generated based on identifying information of the title. An example is given as follows.

```
     <Get>
      <CmdId>5</CmdId>
      <Meta>
       <Type xmlns='syncml:metinf>message/rfc2822</Type>
      </Meta>
      <Item>
     <Target>
      <LocURI>emailstore/1234?emailitem</LocURI>
       </Target>
      </Item>
     </Get>
```

In this example, the title of the data attribute is "emailitem" and the identifying information is "1234". A data synchronization client may acquire the title of the data based on the identifying information "1234".

In the method in accordance with the present invention, it may be configured that associated synchronization may be performed for multiple data synchronization clients, which may be configured in a data synchronization server or in subscription information of a user. Accordingly, after performing data synchronization with one of the multiple data synchronization clients, the data synchronization server will perform data synchronization for the other of the multiple data synchronization clients according to the configuration.

The method as shown in Fig.8 may be adopted in a data synchronization process when partial-data synchronization is required.

After the block 802, the apparatus where the data synchronization client resides, i.e. a user client, may send a request for acquiring the whole data item to the equipment storing the data item on the network side by certain operation done to the data link, and then obtain the whole data item.

After the block 802, the apparatus where the data synchronization client resides, i.e. a user client, may also load the data link into service data and send the service data. The apparatus receiving the service data on the network side requests the device storing the corresponding data item to provide the whole data item or a second part of the data item according to the data link included in the service data, loads the acquired whole data item or the second part of the data item into the service data, and then processes the service data. Before requesting the device storing the data item to provide the whole data item or the second part of the data item, the process further includes determining whether contents of the service data are needed according to an operator policy, user subscription information, and user settings, requesting the device storing the corresponding data item to provide the whole data item or the second part of the data item if the contents of the service data are needed, or otherwise, process the service data directly.

The above mentioned service data may be a short message, a multimedia message, a converged IP message or an email, and correspondingly the apparatus receiving the service data on the network side as a service application server may be a short message server, a multimedia message server, a converged IP message server or an email server. Processing the service data performed by the apparatus on the network side typically includes sending the service data, i.e. sending a short message, a multimedia message or an email.

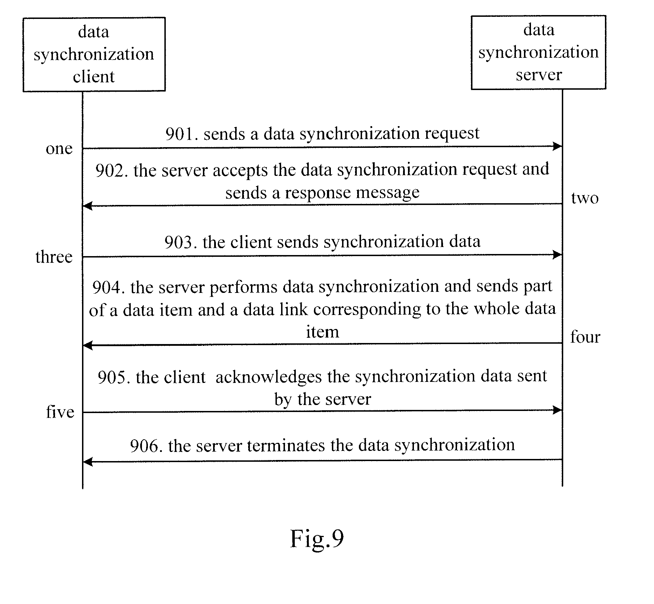

Taking a data synchronization client initiating data synchronization as an example, the overall synchronization procedure of a method in accordance with the present invention is as shown in Fig.9. In this embodiment, the data synchronization client requires the whole data item. The procedure includes the following steps.

In block 901, the data synchronization client sends a data synchronization request to a data synchronization server. The data synchronization request includes initialization negotiation parameters such as a filtering rule for partial-data synchronization and information indicating that the client requires the server to send a data link corresponding to a whole message or a whole media file.

After receiving the data synchronization request, the data synchronization server determines, based on the initialization negotiation parameters and the capabilities of the data synchronization server, whether partial-data synchronization is supported and whether sending a data link to the user is supported. If they are supported, the data synchronization server in block 902 sends to the data synchronization client a response message which indicates that the data synchronization request is accepted and which includes information of the capabilities of the data synchronization server. If the data synchronization server will not accept the data synchronization request due to the capabilities of the data synchronization server, the data synchronization server may send to the data synchronization client a response message indicating that the data synchronization request is not accepted, and terminate the procedure.

After receiving from the data synchronization server the response message indicating that the data synchronization request is accepted, the data synchronization client sends synchronization data to the data synchronization server in block 903, and these data are not restricted by the filtering rule.

The data synchronization server receives the synchronization data from the data synchronization client, performs data synchronization according to the synchronization data, modifies the user data correspondingly, searches for synchronization data to be sent to the data synchronization client based on the filtering rule for partial-data synchronization, acquires a data link corresponding to the whole data item of the data item if the synchronization data is part of a data item. And in block 904, the data synchronization server sends an acknowledgement message to the data synchronization client to acknowledge the synchronization data sent by the data synchronization client, and sends to the data synchronization client the data link and the synchronization data according to which the data synchronization client will perform synchronization.

After receiving the synchronization data from the data synchronization server, the data synchronization client performs synchronization, modifies the corresponding data item, and stores the data link and the part of the data item correspondingly. And in block 905, the data synchronization client returns a data packet to the data synchronization server to acknowledge the synchronization data sent by the data synchronization server. Then in block 906, the data synchronization server returns a data packet to the data synchronization client to terminate the data synchronization.

An embodiment in accordance with the present invention is hereinafter described in detail taking a method applied to a converged IP message system as an example.

Suppose that user A has two converged IP message clients: a mobile phone with limited memory and a PC. And user A wishes that the PC could serve as a backup for network storage. Thus, user A configures in the converged IP message server that the PC will perform whole-data synchronization for messages and media files stored in a network-based data storage device. Moreover, user A prefers that the mobile phone stores only part of each of the messages, such as titles and senders of the messages, and part of each of the media files, such as file names, file sizes and creation dates, because the memory capacity of the mobile phone is limited. Therefore, user A configures in the converged IP message server that the mobile phone will perform partial-data synchronization for the messages and media files stored in the network-based data storage device and may acquire all the contents of a message or a media file using a data link. Of course, the user may configure more settings in the converged IP message server for data synchronization. For example, it can be configured that the converged IP message server performs timing synchronization with a designated converged IP message client, or automatic synchronization when a converged IP message client logs in, or associated synchronization with other converged IP message clients after performing synchronization with one of the converged IP message clients.

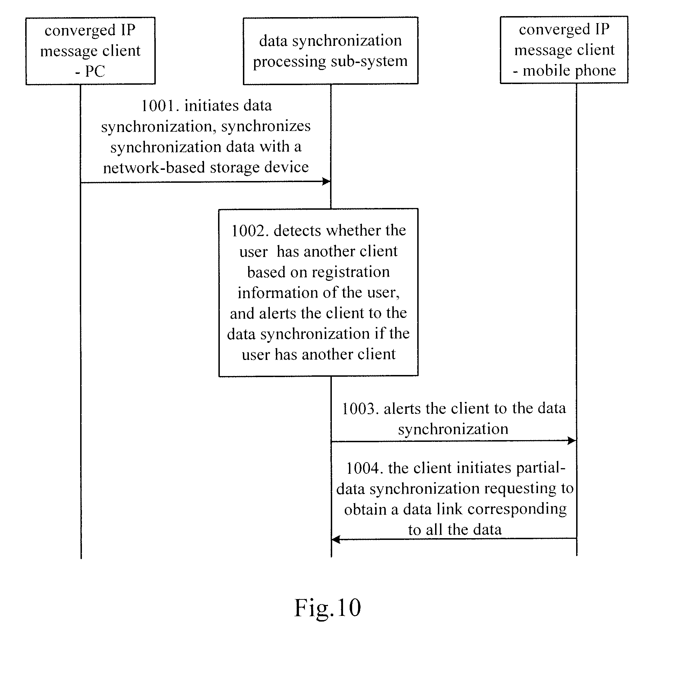

In this embodiment, suppose that both the clients of the user, i.e. the PC and the mobile phone, are registered in the converged IP message system and the user configures that the server performs associated synchronization with the other devices after performing synchronization with one of the devices, i.e. associated synchronization is to be performed for the PC and the mobile phone. Fig.10 shows an exemplary data synchronization procedure performed in a converged IP message system for multiple devices. In Fig.10, data synchronization is implemented by a converged IP message server, i.e. the converged IP message server includes a data synchronization processing sub-system, and the mobile phone requires part of a data item and a data link of the whole data item.

As shown in Fig.10, in block 1001, user A re-organizes messages and media files, for example, changing the title of a message, deleting some out-of-date messages, or classifying media files into new file folders. Such changes of data are synchronized through whole-data synchronization with the data synchronization processing sub-system into a storage device storing user data in the converged IP message system.

In block 1002, after performing whole-data synchronization with the PC of user A, the converged IP message system detects another registered converged IP message client of the user, i.e. the mobile phone, according to the registration information of the user, and the registration information shows that associated synchronization is required for the PC and the mobile phone. Therefore in block 1103, the data synchronization processing sub-system sends a server alert sync message according to a server alter sync scheme to the mobile phone to alert the mobile phone to the data synchronization.

In block 1003, the mobile phone interacts with the data synchronization processing sub-system to perform a partial-data synchronization procedure in accordance with the present invention as shown in Fig.9. The procedure is described in brief as follows. The mobile phone sends, according to a filtering rule, the part of a data item to be synchronized to the data synchronization processing sub-system in a data synchronization request. The request also instructs the data synchronization processing sub-system to provide a data link for all messages or media files. The data synchronization processing sub-system accepts the data synchronization request and exchanges information of the data changes. The data synchronization processing sub-system sends to the mobile phone the synchronization data selected based on the filtering rule to, for example, change the title of a message in the mobile phone that has been changed in the PC, or delete a message in the mobile phone that has been deleted in the PC, or move a media file into another file folder in the mobile phone that has been moved into the corresponding file folder in the PC. The data synchronization processing sub-system also sends the data link corresponding to all the messages or media files. And the data synchronization processing sub-system terminates the synchronization procedure through an acknowledging procedure.

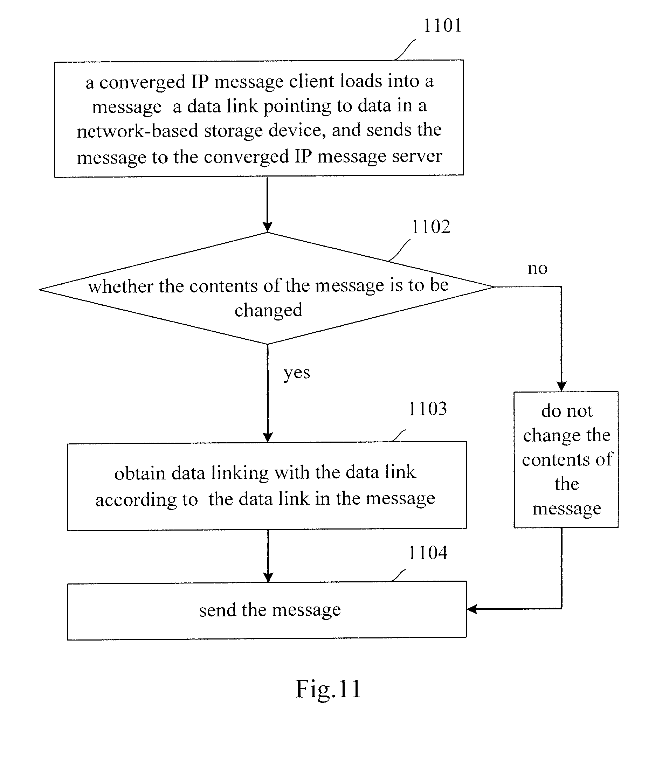

Through the partial-data synchronization procedure in block 1003, the mobile phone will not have to include the whole data item in a message to be sent to a peer client. A message processing procedure after the synchronization is as shown in Fig.11, which includes the following steps.

In block 1101, the mobile phone loads the data link from the data synchronization processing sub-system into a message to be sent.

In block 1102, after receiving the message, the converged IP message server decides whether the contents of the message is to be replaced, which is based on information, e.g. an operator policy on whether replacing a data link in a message is supported, user subscription information indicating whether the service of replacing a data link in a message is subscribed, and setting information of the user on whether the function of replacing a data link in a message is activated. And the converged IP message server performs block 1103 if the contents of the message are to be replaced, or otherwise processing and sending the message without replacing the contents of the message.

In block 1103, the converged IP message server acquires the whole data item of the corresponding data item according to the data link in the message and substitutes the data link with the whole data item in the message to obtain a message carrying the whole data item.

In block 1104, the converged IP message server processes the message in which the data link has been replaced, i.e. sending the message in which the data link has been replaced.

With the above procedure, a converged IP message client may load data needed into a message to be sent without having to download the data from a network-based data storage.

Embodiments of applying the methods and systems in accordance with the present invention to a converged IP message system have been described in detail. The method and system in accordance with the present invention may also be applied to other service systems where service application servers reside. The detailed implementation can be obtained by referring to the above embodiments, and will not be described herein.

In an embodiment of the present invention, a data synchronization server acquires a first part of a data item to be sent to a data synchronization client, acquires a data link corresponding to the whole data item or a second part of the data item, and sends the first part of the data item and the data link to the client. With the method, the data synchronization client may directly acquire the whole data item or the second part of the data item by means of the data link without having to acquire the whole data item or the second part of the data item through another data synchronization procedure again. Therefore, time of the user is saved and the amount of information interacted between the data synchronization server and the data synchronization client is reduced.

In an embodiment of the present invention, a user adds a data link into a service data such as a message or an email and sends the service data through a data synchronization client. A server receiving the service data interacts with a data synchronization server to acquire the whole data item or a second part of the data item by means of the data link and loads the acquired data into the service data. Thus, the data synchronization client may load the whole data item or the second part of the data item into the service data without having to acquire the whole data item or the second part of the data item. Therefore, stress on storage capacity of a client is reduced, time of the user is saved, and the amount of the information interacted between the data synchronization client and the network is reduced.

In addition, in an embodiment of the present invention, associated synchronization may be configured to be performed for multiple data synchronization clients. And after performing data synchronization with one of the multiple data synchronization clients, a data synchronization server will perform associated data synchronization with the other data synchronization clients according to the configuration. Thus, automatic synchronization is implemented for multiple data synchronization clients which are to be synchronized, which is convenient for users.

The foregoing is the described detailed embodiments of the present invention. The method of the present invention can be modified appropriately during the detailed implementation, to meet the specific requirements of the specific cases. It is thereby understood that the specific embodiments according to the present invention are just demonstrative, and are not for use in limiting the protection scope of the present invention.

## Claims

1. A data synchronization method comprising:
acquiring, in a partial-data synchronization process, a first part of a data item which is to be sent to a data synchronization client;
acquiring a data link with which the whole data item or a second part of the data item is retrievable;
sending the first part of the data item and the data link to the client.

2. The method of Claim 1, wherein the acquiring a data link with which the whole data item or a second part of the data item is retrievable comprises: acquiring the data link based on information which is set in a data synchronization server and indicates that the data link of the whole data item or a second part is to be acquired when partial-data synchronization is performed; or,
acquiring the data link based on a request for data link with which the whole data item or a second part of the data item is retrievable sent by the data synchronization client when partial-data synchronization is performed.

3. The method of Claim 1, wherein the acquiring the data link comprises: acquiring the information of the location of the whole data item or a second part of the data item in the data item and generating the data link based on the information of the locationof data item; or,
acquiring the information of the unique identifier of the whole data item or a second part of the data item in the data item and generating the data link based on the information of the unique identifierof data item.

4. The method of Claim 1, wherein associated synchronization is set to be performed for multiple data synchronization clients, and accordingly, the method further comprises:
performing data synchronization with the other data synchronization clients based on the setting information that the associated synchronization is to be performed for the multiple data synchronization clients, after performing data synchronization with one of the multiple data synchronization clients.

5. The method of any of Claims 1 to 4, further comprising:
sending, by an apparatus where the data synchronization client is located, a request for acquiring the whole data item or a second part of the data item to an equipment storing the corresponding data item on the network side upon the operation of the user clicking the data link;
sending, by the equipment storing the corresponding data item on the network side, the whole data item or the second part of the data item of the corresponding data item to the apparatus where the data synchronization client is located according to the request.

6. The method of any of Claims 1 to 4, further comprising:
setting, by an apparatus where the data synchronization client is located, the data link in a specific service and sending the specific service;
requesting, by an equipment receiving the specific service on the network side, an equipment storing the corresponding data item to acquire the whole data item or a second part of the data item based on the data link in the specific service, setting the acquired the whole data item or second part of the data item in the specific service, and then processing the specific service.

7. The method of Claim 6, before requesting the equipment storing the corresponding data item for acquiring the whole data item or a second part of the data item of the data item, further comprising:
determining whether the contents of the specific service is needed based on the policy of the operator, user subscription information and user setting, performing the step of requesting the equipment storing the corresponding data item for acquiring the whole data item or a second part of the data item if yes, and otherwise, processing the specific service directly.

8. The method of Claim 7, wherein the specific service comprises: a short message, multimedia message, converged IP message or email;
the processing, by the equipment on the network side, the specific service comprises: sending, by the equipment on the network side, the short message, multimedia message, converged IP message or email.

9. The method of Claim 1, wherein the first part of the data item is the information of the attribute or field of data in the data item,
and the second part of the data item is the information of the field or attribute of the data in the data item.

10. A data synchronization system comprising:
a data synchronization server for acquiring a first part of the data item sent to a first data synchronization client, acquiring a data link with which the whole data item or a second part of the data item is retrievable, and sending the first part of the data item and the data link to the first data synchronization client in a partial-data synchronization process;
a first data synchronization client for receiving the first part of the data item of a data item and the data link with which the whole data item or a second part of the data item is retrievable from the data synchronization server, and storing the first part of the data item and the data link correspondingly.

11. The system of Claim 10, further comprising:
a user client for setting the data link received by the first data synchronization client in a specific service and sending the specific service, or acquiring the whole data item or the second part of the data item corresponding to the data link from the network side upon the operation of the user clicking the data link;
a service application server for receiving the specific service comprising the data link from the user client, acquiring the whole data item or the second part of the data item of the corresponding data item based on the data link, and replacing the data link in the specific service with the acquired the whole data item or the second part of data.

12. The system of Claim 11, wherein the service application server comprises: a short message server, multimedia message server, email server, or converged IP message server.

13. The system of Claim 10, wherein the system further comprises: a second data synchronization client for performing data synchronization with the data synchronization server;
and the data synchronization server is further adapted to interact with the first data synchronization client to perform the data synchronization based on setting information that associated synchronization is to be performed for the second data synchronization client and the first data synchronization client and the information for which the data synchronization server performs data synchronization with the second data synchronization client; or,
and to interact with the second data synchronization client to perform the data synchronization based on setting information that associated synchronization is to be performed for the second data synchronization client and the first data synchronization client and the information for which the data synchronization server performs data synchronization with the first data synchronization client.

14. The system of any of Claims 10-13, wherein the data synchronization server is set in the service application server or the data synchronization server interacts with the data synchronization client through the service application server.

15. The system of Claim 10, further comprising: a data link generating device for generating the data link of the whole data item or a second part of the data item based on the information of the location or unique identifier of data in the data item, and providing the data link to the data synchronization server.

16. The system of Claim 15, further comprising: a network storage server for storing the whole data item of the data item;
the data synchronization server is further adapted to acquire the information of the location or unique identifier of data in the data item in the network storage server, and to provid the information of the location or unique identifier of data in the data item to the data link generating device.

17. A data synchronization server comprising:
a communication module for acquiring a first part of data item sent to a data synchronization client, and sending the received first part of the data item and a data link to the data synchronization client;
a synchronization service processing module for acquiring a data link with which the whole data item or a second part of the data item is retrievable based on the first part of the data item acquired by the communication module, and providing the data link to the communication module.

18. The data synchronization server of Claim 17, wherein the synchronization service processing module is further adapted to interact, based on setting information that associated synchronization is to be performed for multiple data synchronization clients and the information for which the synchronization service processing module performs data synchronization with one of the multiple data synchronization clients, with the other data synchronization clients of the multiple data synchronization clients through the communication module to perform data synchronization.

19. The data synchronization server of Claim 17, wherein the synchronization service processing module is further adapted to acquire location information or a unique identifier of data in the data item, and generate the data link based on the information of the location or unique identifier, or provide the location information or the unique identifier to the data link generating deice and receive the data link of the whole data item or a second part of the data item sent by the data link generating device.

20. A client comprising:
a communication module for receiving a first part of a data item and a data link with which the whole data item or a second part of the data item is retrievable sent by a data synchronization server;
a synchronization service processing module for storing the data link and first part of the data item received by the communication module.

21. The client of Claim 20, further comprising: a service processing module for setting the data link in a specific service based on the operation of the user and sending the specific service.
